# EUROPÄISCHE PATENTSCHRIFT

(11) **EP 1 040 294 B1**
(45) Veröffentlichungstag und Bekanntmachung des Hinweises auf die Patenterteilung: **13.11.2002**
(21) Anmeldenummer: 98965739.0
(22) Anmeldetag: 02.12.1998
(51) Int. Cl.: F16L 33/207

(54) **ARMATUR ZUM ANSCHLUSS EINES SCHLAUCHES**
FITTING FOR COUPLING A FLEXIBLE TUBE
EMBOUT POUR LE RACCORDEMENT D'UN TUYAU FLEXIBLE

(30) Priorität: 19.12.1997 DE 19756675
(43) Veröffentlichungstag der Anmeldung: 04.10.2000
(73) Patentinhaber: Kühner GmbH & CIE, 71570 Oppenweiler (DE)
(72) Erfinder: SCHEYHING, Ulrich, D-71364 Winnenden (DE); KALLFASS, Bernd, D-71554 Weissach (DE)
(74) Vertreter: Patentanwälte Ruff, Wilhelm, Beier, Dauster & Partner
(86) Internationale Anmeldenummer: EP9807831
(87) Internationale Veröffentlichungsnummer: WO99032822

(56) Entgegenhaltungen:
- DE-A- 4 340 450
- DE-U- 9 102 495
- DE-U- 9 420 527
- FR-E- 81 254

## Beschreibung

Die Erfindung betrifft eine Armatur mit einem Nippel zum Anschluß eines Schlauches und mit einer Schlauchfassung, die den Schlauch im Bereich des Nippels umgibt und mit Preßsicken gegen den Schlauch gedrückt ist, die auf die mit umlaufenden Rampen und Haltekanten versehene Nippelkontur abgestimmt sind, wobei mindestens eine der in Aufschieberichtung des Schlauches hinter den Rampen gelegene Zone mit einem Abdichtmaterial versehen ist.

Eine Armatur dieser Art ist aus der DE 43 40 450 A1 bekannt. Bei dieser bekannten Armatur besitzt der Nippel eine Kontur mit zwei umlaufenden Rampen, und man hat dabei die in der Aufschieberichtung des Schlauches jeweils hinter den Rampen gelegenen Zonen mit einem Beschichtungsmaterial aus Polyurethan oder aus thermoplastischem Acryl beschichtet, um eine Abdichtung des innenverkleideten Schlauches zu erzielen. Das Aufbringen des Beschichtungsmaterials, das dort nicht klebend sein soll, ist, wenn eine gleichmäßige Schichtdicke garantiert sein soll, verhältnismäßig aufwendig. Die in der DE 43 40 450 A1 erwähnten Armaturen nach dem DE-U 91 02 495 sind daher in der Praxis weiter vorgesehen worden.

Aus der DE-PS 702 861 ist es weiter bekannt, zur Befestigung eines Schlauches aus einem Kunststoff mit Weichmachern eine Zwischenschicht aus dem gleichen Material auf die hinter den Rampen eines Anschlußnippels gelegenen Zonen aufzubringen und aus dieser Zwischenschicht den Weichmacher durch ein Lösungsmittel herauszulösen. Die dann hart werdende, fest am Schlauch haftende Zwischenschicht gewährleistet voraussichtlich eine dauerhafte Befestigung, ist aber nur sehr aufwendig herzustellen.

Der vorliegenden Erfindung liegt die Aufgabe zugrunde, bei einer Armatur der eingangs genannten Art eine vereinfachte Ausbildung und Herstellung der Abdichtzone zu erreichen.

Zur Lösung dieser Aufgabe wird bei einer Armatur der eingangs genannten Art nach der Erfindung vorgeschlagen, daß als Abdichtmaterial ein Klebefilm vorgesehen ist, der in Streifenform auf den Nippel aufgewickelt ist. Durch diese Ausgestaltung macht das Aufbringen des Abdichtmateriales keinerlei Schwierigkeiten, und es kann auch die Dicke der Abdichtmaterialschicht sehr einfach durch die Dicke des Klebefilmes oder durch die Anzahl der Wicklungen ausgewählt und bestimmt werden.

In Weiterbildung der Erfindung kann der Klebestreifen aus einem Transferklebstoff ohne Trägermaterial bestehen, so daß der Klebefilm beispielsweise von der Rolle abgezogen und aufgewickelt werden kann. Natürlich ist es auch möglich, den Klebestreifen vorher auf entsprechende Länge zu schneiden und ihn erst dann auf den Nippel aufzuwickeln.

In Weiterbildung der Erfindung hat sich als Transferklebstoff ein Acrylatklebstoff in Filmform als besonders vorteilhaft erwiesen, der in weiterer Ausgestaltung auch eine Breite aufweisen kann, die der Länge der Zone des Nippels, die mit dem Abdichtmaterial versehen werden soll, in etwa entspricht. Natürlich wäre es möglich, die Breite des Klebefilmes kleiner als die Länge der Zone des Nippels zu wählen. In jedem Fall sollte eine Überlappung der Enden des Klebestreifens vorgesehen werden, die bei entsprechendem Schrägschnitt der Enden des Klebestreifens über einen Teil des Umfanges der Zone und bei Mehrfachwicklung als eine geringfügige Verdickung auch über den ganzen Umfang verlaufen kann.

In Weiterbildung der Erfindung schließlich ist es zweckmäßig, die Schlauchfassung im Bereich der mit dem Klebefilm versehenen Zone des Nippels mit mindestens einer Sicke gegen den Nippel zu drücken, um die gewünschte dauerhafte und sichere Abdichtung zu erreichen.

Die Erfindung ist in der Zeichnung anhand der verschiedenen Herstellungsstufen von Ausführungsbeispielen dargestellt und wird im folgenden erläutert. Es zeigen:
- Fig. 1: die schematische Darstellung des Aufwickelns eines Klebestreifens auf eine Zone eines Nipppels einer erfindungsgemäß ausgestalteten Armatur,
- Fig. 2: die Darstellung des Aufwickelvorganges mit einem auf Länge geschnittenen Klebestreifen,
- Fig. 3: die Darstellung des Aufwickelvorganges mit einem wendelförmig gewickelten Klebestreifen,
- Fig. 4: den Vorgang des axialen Aufschiebens des Schlauches auf den nach den Fig. 1, 2 oder 3 vorbereiteten Nippel,
- Fig. 5: den aufgeschobenen Schlauch in seiner Endstellung und
- Fig. 6: die fertiggestellte Armatur mit verpreßter Schlauchfassung.

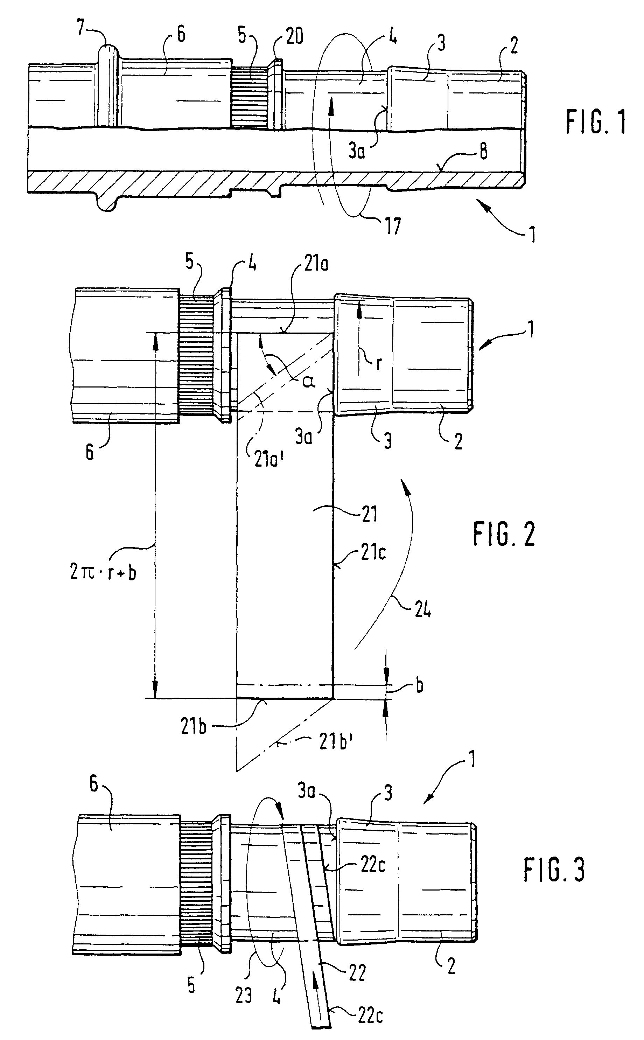

Die Figur 1 zeigt einen aus Metall oder auch aus Kunststoff gefertigten Nippel 1, der zum Anschluß eines Kältemittelschlauches, z.B. für Klimaanlagen von Kraftfahrzeugen, bestückt werden soll. Der Nippel 1 weist eine etwa zylinderische Zone 2, eine von dieser Zone aus ansteigende Rampe 3 mit einer Haltekante 3a für den Schlauch und eine dahinter liegende Zone 4 auf, die von einem Bund 20 begrenzt wird, hinter dem ein Halsstück mit einer Rändelung 5 vorgesehen ist. Von dieser Rändelung aus geht der Nippel 1 in einen etwa zylindrischen Teil 6 über, der beim Ausführungsbeispiel mit einem umlaufenden Wulst 7 versehen ist. Der Nippel 1 weist im übrigen eine zylindrische Durchgangsbohrung 8 auf, über die in nicht näher gezeigter Weise die Verbindung zwischen einem aufgeschobenen Schlauch 9 und einem Anschluß hergestellt wird.

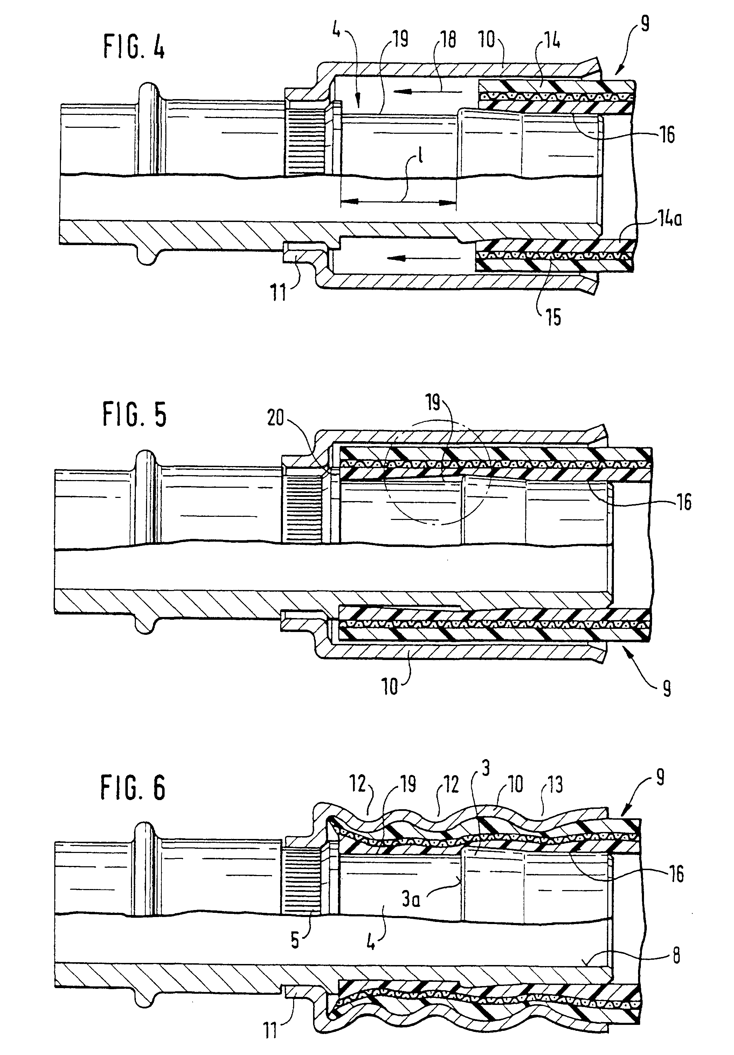

Die Fig. 6, die die fertiggestellte Armatur, d.h. also den Nippel mit dem aufgeschobenen Schlauch 9 zeigt, läßt erkennen, daß der Nippel 1 von einer Schlauchfassung 10 aus einem verformbaren Metall, beispielsweise Aluminium, umgeben ist, die mit einem Anschlußstück 11 kleineren Durchmessers auf die Rändelung 5 aufgesetzt und dort verpreßt wird, um eine Verdrehung zu verhindern und eine formschlüssige Verbindung herzustellen. Diese, im Endzustand mit mehreren Sicken 12 bzw. 13 versehene Schlauchfassung 10 sorgt für eine dichte und feste Verbindung des Schlauches 9 mit dem Nippel 1.

Der Schlauch 9 besteht aus mehreren Lagen 14, 14a, 15 und 16, von denen die innerste Lage 16 eine Innenauskleidung aus Polyamid ist. Diese Innenauskleidung 16 ist von einer Zwischenschicht 14a ummantelt, die wiederum von einem Festigkeitsträger 15 umgeben ist. Diese Schicht des Festigkeitsträgers 15 ist noch mit einer Außenschicht 14 umgeben. Solche Schläuche mit einer Polyamidinnenauskleidung sind schwer armierbar. Hierfür ist die Erfindung besondes geeignet.

Zur Herstellung der neuen Schlaucharmatur wird nun folgendes veranlaßt:

Die etwa zylindrische Zone 4 des Nippels 1 wird gemäß Fig. 1 zunächst im Sinn des Pfeiles 17 mit einem Klebstoffstreifen bewickelt. Dieser Klebstoffstreifen, der in Fig. 1 nicht näher dargestellt ist, ist ein Streifen aus einem Acrylat-Klebstoff, wie er beispielsweise unter der Bezeichnung 3M Klebefilm VHB auf dem Markt ist. Dieser Klebestreifen besteht aus Acrylatklebstoff in Filmform ohne Trägermaterial. Der Klebstoff besitzt eine sehr hohe Temperaturbeständigkeit. Er ist auch gegen Lösemittel und UV-Licht beständig, sowie gegen Witterungseinflüsse, Alterung und Weichmacher. Es findet keine Aushärtung statt. Der Klebstoff bleibt viskoelastisch und unverändert in seiner Beschaffenheit. Er benötigt eine bestimmte Verweilzeit, in der er in die Oberflächenrauhigkeiten der ihm zugewandten Kontaktflächen der Zone 4 fließen kann. Die Verweilzeit kann man durch Erhöhung der Temperatur reduzieren.

Dieser Klebstoffstreifen kann gemäß Fig. 2 ein auf Länge geschnittener Streifen 21 sein, dessen Breite etwas kleiner ist als die Länge der Zone 4. Beim dargestellten Ausführungsbeispiel entspricht die Breite des Klebstoffstreifens 21 fast der Länge der Zone 4. Es hat sich gezeigt, daß aber auch eine Breite ausreichend ist, wenn sie nur etwa zwei Drittel der Länge der Zone 4 entspricht. Die Länge des Klebstoffstreifens 21 beträgt 2π·r+b, wobei r der Radius des Nippels im Bereich der Zone 4 ist und b ein Maß gibt, durch welches der in einer Wicklung aufgebrachten Streifen 21 sich an seinen Enden 21a, 21b gegenseitig überlappt. Wie strichpunktiert dargestellt ist, wäre es auch möglich, den Klebstoffstreifen 21 mit schrägen Endkanten 21a' und 21b' zu versehen und ihn dann in einer Wicklung aufzubringen, so daß sich auch dann die Enden etwas überlappen, die Überlappungsnaht aber nicht längs einer Mantellinie in der Zone 4, sondern schräg zu einer solchen verläuft. Der Pfeil 24 deutet an, daß der Klebstoffstreifen 21, wenn er mit seiner Kante 21a an der Zone 4 angelegt ist, um die Zone herumgewickelt wird, bis sein Ende das angelegte Ende 21a etwas überlappt. Die Fig. 2 zeigt dabei, daß der Klebstoffstreifen 21 mit seiner rechten Längskante 21c an der Haltekante 3a der Rampe 3 anliegt. Dies hat bei dem nachfolgenden Aufschiebevorgang des Schlauches gemäß Fig. 4 Bedeutung insofern, als dadurch vermieden wird, daß beim Aufschieben des Schlauches der Klebstoffstreifen von der Zone 4 abgeschoben werden kann.

Die Fig. 3 zeigt eine Variante des Aufwickelvorganges, wie er schematisch in Fig. 1 dargestellt ist. Hier wird ein Klebstoffstreifen 22 wesentlich kleinerer Breite verwendet, der mit einer seiner Längskanten 22c nun ebenfalls anschließend an die Haltekante 3a der Rampe 3 mit einer ersten Wicklung, die nicht voll über 360° erfolgen muß, angelegt wird. Der Streifen 22, der beispielsweise von einer nicht dargestellten Rolle abgewickelt werden kann, wird dann, wie dargestellt wendelförmig so auf die schon auf der Zone 4 vorhandenen Streifenwicklungen aufgewickelt, daß sich die Kante 22c über die schon vorhandene Wicklung teilweise darüberlegt. Auf diese Weise wird eine wendelförmige Wicklung aufgebracht, die nicht bis ganz zum Ende der Zone 4 verlaufen muß. Sie sollte aber etwa bis zu zwei Dritteln der Länge, ausgehend von der Haltekante 3a aus, aufgebracht sein. Dies kann auch dadurch geschehen, daß beispielsweise der Nippel 1 im Sinn des Pfeiles 23 gedreht wird, so daß der Klebestreifen 22 entsprechend von der Rolle abgezogen und aufgewickelt wird.

Wenn der Nippel nach Fig. 1, 2 oder 3 in der geschilderten Weise mit der Klebstoffschicht versehen ist, wird der Nippel 1 gemäß Fig. 4 mit der Schlauchfassung 10 versehen, die ebenso wie das Ende des Schlauches 9 axial in Richtung des Pfeiles 18 auf den Nippel aufgeschoben wird. Die Ausbildung der Rampe 3 verhindert dabei bei diesem axialen Aufschieben, daß von der Vorderkante des Schlauches 9 die aufgebrachte Klebstoffschicht weggeschoben wird.

Wie Fig. 5 in dem dargestellten Detail erkennen läßt, wird die innere Schicht 16 des Schlauches 9 weitgehend berührungsfrei über die dann in der Zone 4 vorhandene Klebstoffschicht 19 hinweggeschoben, bis der Schlauch an dem Bund 20 (Fig. 3) zur Anlage kommt. Dann wird gemäß Fig. 6 die Schlauchfassung 10 verpreßt, wobei mindestens eine Sicke 12, - oder eine entsprechend breitere Sicke - besser, wie dargestellt zwei Sikken 12, im Bereich der Zone 4, d.h. also im Bereich der aufgebrachten Klebstoffschicht 19, vorgesehen werden, um die Innenschicht 16 des Schlauches 9 fest und dauerhaft gegen die Klebstoffschicht 19 zu drücken. Die neue Schlaucharmatur ist daher fertig. Sie ist dauerhaft und dicht.

## Patentansprüche

1. Armatur mit einem Nippel (1) zum Anschluß eines Schlauches (9) und mit einer Schlauchfassung (10), die den Schlauch im Bereich des Nippels umgibt und mit Preßsicken (12, 13) gegen den Schlauch gedrückt ist, die auf die mit umlaufenden Rampen (3) und Haltekanten versehene Nippelkontur abgestimmt sind, wobei mindestens eine der in Aufschieberichtung des Schlauches hinter einer Rampe (3) gelegenen Zonen (4) mit einem Abdichtmaterial versehen ist, **dadurch gekennzeichnet, daß** als Abdichtmaterial ein Klebefilm vorgesehen ist, der in Streifenform (17) auf den Nippel (1) aufgewickelt ist.

2. Armatur nach Anspruch 1, **dadurch gekennzeichnet, daß** der Klebefilmstreifen (21, 22) aus einem Transferklebstoff ohne Trägermaterial besteht.

3. Armatur nach Anspruch 2, **dadurch gekennzeichnet, daß** als Transferklebstoff ein Acrylatklebstoff in Filmform vorgesehen ist.

4. Armatur nach einem der Ansprüche 1 bis 3, **dadurch gekennzeichnet, daß** der Klebefilmstreifen (21) eine Breite aufweist, die kleiner ist als die Länge (1) der Zone (4) des Nippels (1), insbesondere nur etwa 2/3 dieser Länge beträgt, und daß eine Seitenkante (21c) des Klebefilms etwa bündig zu der Haltekante (3a) der Rampe verläuft.

5. Armatur nach einem der Ansprüche 1 bis 3, **dadurch gekennzeichnet, daß** der Klebefilmstreifen (21) eine Breite aufweist, die der Länge (1) der Zone (4) des Nippels (1) in etwa entspricht.

6. Armatur nach einem der Ansprüche 1 bis 3, **dadurch gekennzeichnet, daß** die Enden (21a', 21b') des Klebestreifen (21) schräg geschnitten sind.

7. Armatur nach einem der Ansprüche 4 bis 6, **dadurch gekennzeichnet, daß** die freien Enden (21a, 21b) des Klebestreifens (21) sich mindestens über einen Teil (b) der Streifenlänge gegenseitig überlappen.

8. Armatur nach einem der Ansprüche 1 bis 3, **dadurch gekennzeichnet, daß** der Klebestreifen (22) in mehr als einer Wicklung aufgebracht und wendelförmig aufgewickelt ist.

9. Armatur nach Anspruch 8, **dadurch gekennzeichnet, daß** die benachbarten Wicklungen sich teilweise überlappen.

10. Armatur nach Anspruch 1, **dadurch gekennzeichnet, daß** die Schlauchfassung (10) im Bereich der mit dem Klebefilm (19) versehenen Zone (4) des Nippels (1) mit mindestens einer Sikke (12) gegen den Nippel gedrückt ist.

## Claims

1. Fitting with a nipple (1) for coupling a flexible tube (9), and with a flexible tube holder (10), which surrounds the flexible tube in the region of the nipple and is pressed with mouldable beads (12, 13) against the flexible tube, which beads are adapted to the nipple contour, which is provided with circumferential ramps (3) and retaining edges, wherein at least one of the zones (4) located after a ramp (3) in the push-on direction of the flexible tube is provided with a sealing material, **characterised in that** an adhesive film is provided as sealing material, which film is wound onto the nipple (1) in strip form (17).

2. Fitting according to Claim 1, **characterised in that** the adhesive film strip (21, 22) consists of a transfer adhesive without support material.

3. Fitting according to Claim 2, **characterised in that** an acrylate adhesive in film form is provided as transfer adhesive.

4. Fitting according to any one of Claims 1 to 3, **characterised in that** the adhesive film strip (21) is of a width which is smaller than the length (1) of the zone (4) of the nipple (1), in particular only approximately 2/3 of this length, and that a side edge (21c) of the adhesive film extends approximately flush with the retaining edge (3a) of the ramp.

5. Fitting according to any one of Claims 1 to 3, **characterised in that** the adhesive film strip (21) is of a width which corresponds approximately to the length (1) of the zone (4) of the nipple (1).

6. Fitting according to any one of Claims 1 to 3, **characterised in that** the ends (21a', 21b') of the adhesive strip (21) are cut obliquely.

7. Fitting according to any one of Claims 4 to 6, **characterised in that** the free ends (21a, 21b) of the adhesive strip (21) overlap one another at least over a part (b) of the strip length.

8. Fitting according to any one of Claims 1 to 3, **characterised in that** the adhesive strip (22) is applied in more than one winding and wound on in helical fashion.

9. Fitting according to Claim 8, **characterised in that** the adjacent windings partly overlap.

10. Fitting according to Claim 1, **characterised in that** the flexible tube holder (10) is pressed against the nipple (1) with at least one bead (12) in the region of the zone (4) of the nipple which is provided with the adhesive film (19).

## Revendications

1. Embout équipé d'un raccord à vis (1) pour le raccordement d'un flexible (9) et d'une monture pour flexible (10), qui entoure le flexible dans la zone du raccord à vis et est comprimée par des nervures de pression (12, 13) contre le flexible, qui sont adaptées au contour de raccord à vis pourvu de rampes (3) périphériques et d'arêtes de retenue, au moins une des zones (4) derrière une rampe (3), situées dans le sens d'introduction du flexible, étant pourvue d'un matériau d'étanchéité, **caractérisé en ce qu'**il est prévu comme matériau d'étanchéité un film collant qui est enroulé sur le raccord à vis (1) sous la forme de bande (17).

2. Embout selon la revendication 1, **caractérisé en ce que** la bande de film collant (21, 22) est à base d'une colle de transfert sans matériau support.

3. Embout selon la revendication 2, **caractérisé en ce qu'**il est prévu, comme colle de transfert, une colle à acrylate sous la forme de film.

4. Embout selon l'une quelconque des revendications 1 à 3, **caractérisé en ce que** la bande de film collant (21) présente une largeur qui est inférieure à la longueur (1) de la zone (4) du raccord à vis (1), en particulier représente seulement environ 2/3 de cette longueur, et **en ce qu'**une arête latérale (21c) du film collant arrive à peu près en affleurement avec l'arête de retenue (3a) de la rampe.

5. Embout selon l'une quelconque des revendications 1 à 3, **caractérisé en ce que** la bande de film collant (21) présente une largeur qui correspond à peu près à la longueur (1) de la zone (4) du raccord à vis (1).

6. Embout selon l'une quelconque des revendications 1 à 3, **caractérisé en ce que** les extrémités (21a', 21b') de la bande collante (21) sont coupées en biais.

7. Embout selon l'une quelconque des revendications 4 à 6, **caractérisé en ce que** les extrémités libres (21a, 21b) de la bande collante (21c) se chevauchent réciproquement au moins sur une partie (b) de la longueur de la bande.

8. Embout selon l'une quelconque des revendications 1 à 3, **caractérisé en ce que** la bande collante (22) est appliquée dans plus d'un enroulement et est enroulée en forme de spirale.

9. Embout selon la revendication 8, **caractérisé en ce que** les enroulements voisins se chevauchent partiellement.

10. Embout selon la revendication 1, **caractérisé en ce que** la monture du flexible (10) est appuyée par au moins une nervure (12) contre le raccord à vis dans le secteur de la zone (4), pourvue du film collant (19), du raccord à vis (1).
